# EUROPEAN PATENT APPLICATION

(11) **EP 0 823 650 A1**
(43) Date of publication of application: **11.02.1998**
(21) Application number: 97202368.3
(22) Date of filing: 30.07.1997
(51) Int. Cl.: G02B 6/44

(54) **Fibre-optic junction card**

(30) Priority: 06.08.1996 IT MI961711
(71) Applicant: Optotec S.p.A., 20124 Milano (IT)
(72) Inventor: Mattaini, Guido, 20050 Sovico (Milan) (IT); Dri, Luca, 20091 Bresso (Milan) (IT); Rimprocci, Stefano, 20052 Monza (Milan) (IT); Gallonzelli, Andrea, 20050 Vignate (Milan) (IT)
(74) Representative: Zanardo, Giovanni

(57) **Abstract**

A preferably rectangular or oval junction card (10) for optical fibres (50) which is hinged along its lower side (and removable as necessary) to a suitable rack (20) which enables the card (10) to be rotated through an angle of substantially 90 degrees.

The card is double-fronted and can hence house one or more single or continuous ribbon optical circuits on each face (30), with a minimum radius of curvature of not less than 30 millimetres.

## Description

This invention relates to a fibre-optic junction card.

In urban fibre-optic communication networks it is known to extract from a multifibre cable (which can contain, for example, one hundred or two hundred optical fibres) small groups of fibres (or "ribbons"), for example composed of four, eight or twelve optical fibres, for connection to the desired user items.

It may be necessary to repeat this operation frequently at different times at particular points of the communication network, according to user requests (change of address, cessation of use, connection of new subscribers) and installer requirements, until the available optical fibres have all been used.

To achieve this, there is inserted into the network an accessory (a joint cover or junction module, positioned in the exchange), provided with junction cards to house the joints of cleaved fibres and also the uncleaved and hence continuous fibres.

The joint cover (or the junction module) is provided with the apertures necessary for the entry and exit of the main cable and of the branch cables to the users.

However the continuous and frequent handling of the optical fibres as required for installation or maintenance work causes the fibres to undergo curvature variations and variations in the attenuation of the transmitted signal, together with instability, possible interruptions in the transmitted signal, noise and spurious signals, until they become completely unserviceable.

In addition, the repeated extraction of ribbons from a single multifibre optical cable can be a source of considerable danger, because it creates signal transmission disturbances in the fibres already in service, as fibre repair involves random attempts at access to the damaged fibre.

An object of the present invention is therefore to provide a junction card for fibre-optic joint covers or junction modules which obviates the aforesaid drawbacks by being constructed in such a manner as to allow repeated insertions and extractions of continuous optical fibres into and from a joint cover or junction module, without the danger of damaging fibres already in operation.

A further object of the invention is to enable the card to be installed at any point of the communication network (terminations, joints etc.).

Another object of the invention is to provide a fibre-optic junction card which facilitates the arrangement of the cable ribbons, so as to simplify gradual fibre start-up and avoid random attempts at access for maintenance or repair work which could disturb any fibres already in service, and further which allows a minimum radius of curvature of not less than 30 millimetres.

A further object of the invention is to provide a fibre-optic junction card which is of simple and economical manufacture, not requiring the use of complex or particularly costly techniques.

These and further objects are attained by a fibre-optic junction card in accordance with claim 1, to which reference should be made for brevity.

Advantageously the junction cards, located within the joint cover or junction module, are preferably rectangular or oval in shape and are hinged along their lower side to the interior of a rack, from which they can be removed as required.

Each card is bifacial, in that it can house a fibre-optic ribbon on each of its two faces.

The orientation of the cards is also such that any card can be easily operated on without altering the configuration and curvature of those fibre-optic ribbons not involved in the installation or maintenance work.

In this manner an ordered distribution of all the fibres is achieved within the card, so as to be able to gain immediate access to each of them without having to make random attempts and hence without disturbing signal transmission within any adjacent fibres already in operation.

Further objects and advantages of the present invention will be apparent from the ensuing description and the accompanying drawings, which are provided by way of non-limiting example and in which:

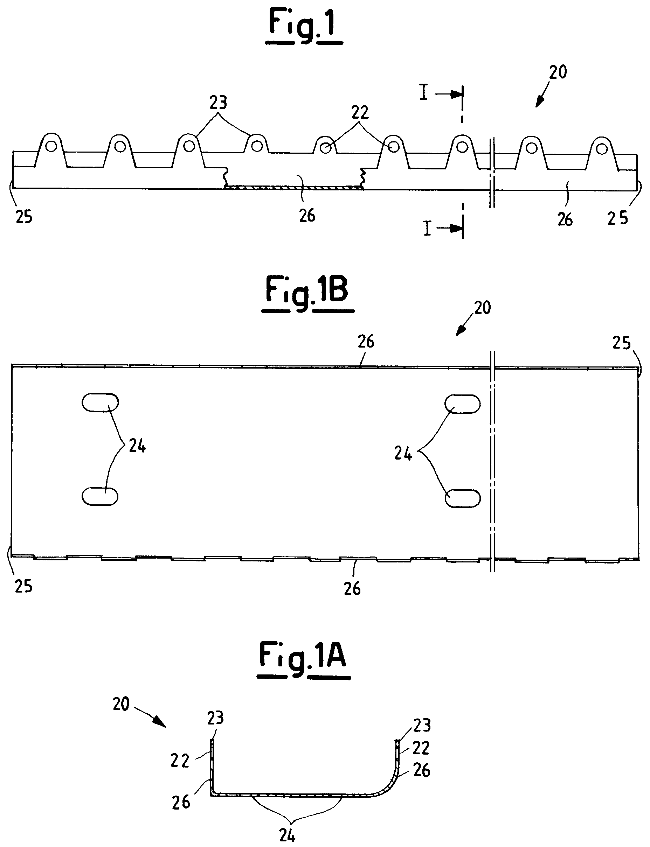

Figure 1 is a partly cut-away partial side view of a rack (to be arranged within a joint cover or junction module) housing the junction cards, according to the present invention;
Figure 1A is a section on the line I-I of the rack of Figure 1;
Figure 1B is a partial plan view of the rack of Figure 1;

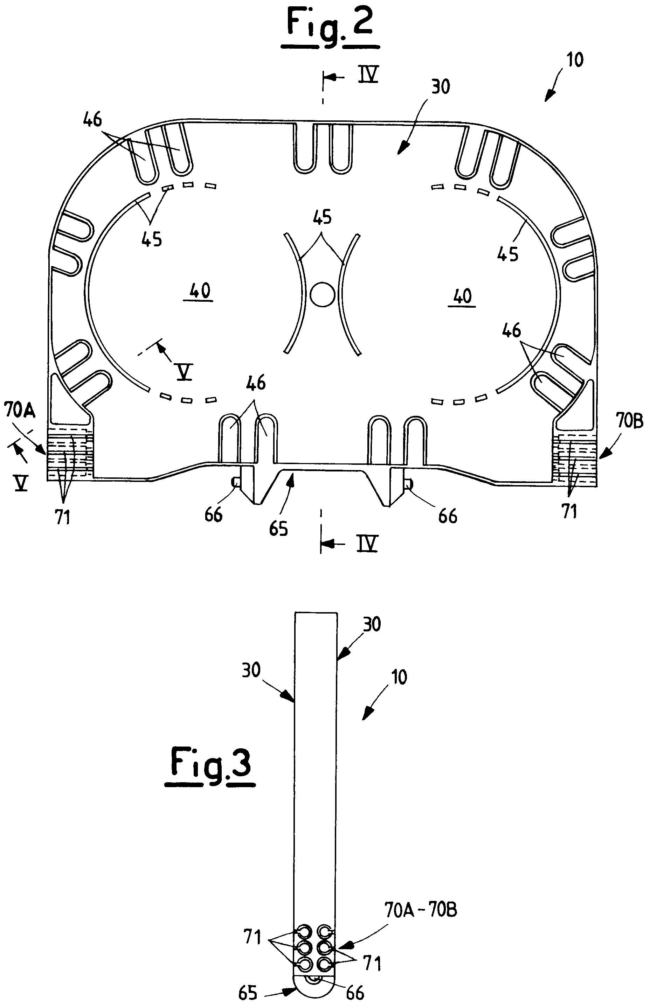

Figure 2 is a plan view of one of the two faces of an exemplifying but non-limiting first embodiment of the junction card of the present invention; the other face of the card being identical in shape and in optical fibre connections;
Figure 3 is a side view of the junction card of Figure 2;

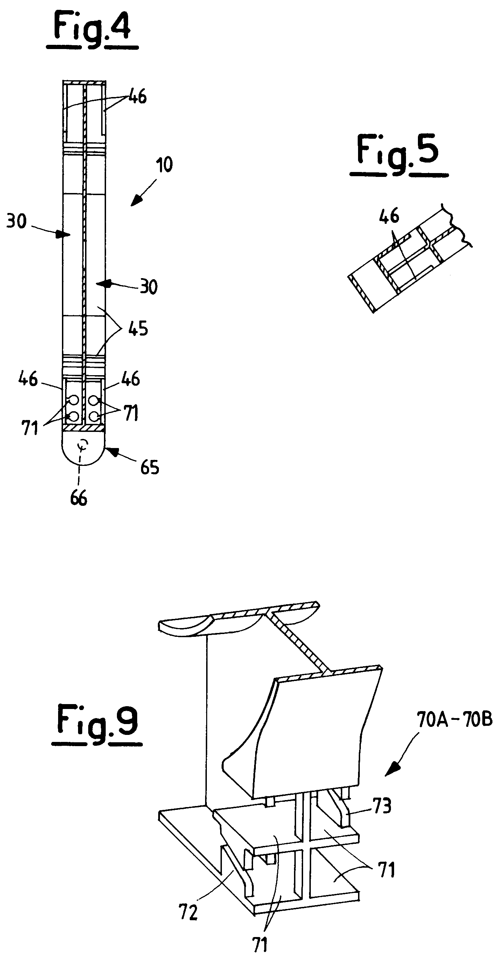

Figure 4 is a section on the line IV-IV of the junction card of Figure 2;
Figure 5 is a section on the line V-V of the junction card of Figure 2;

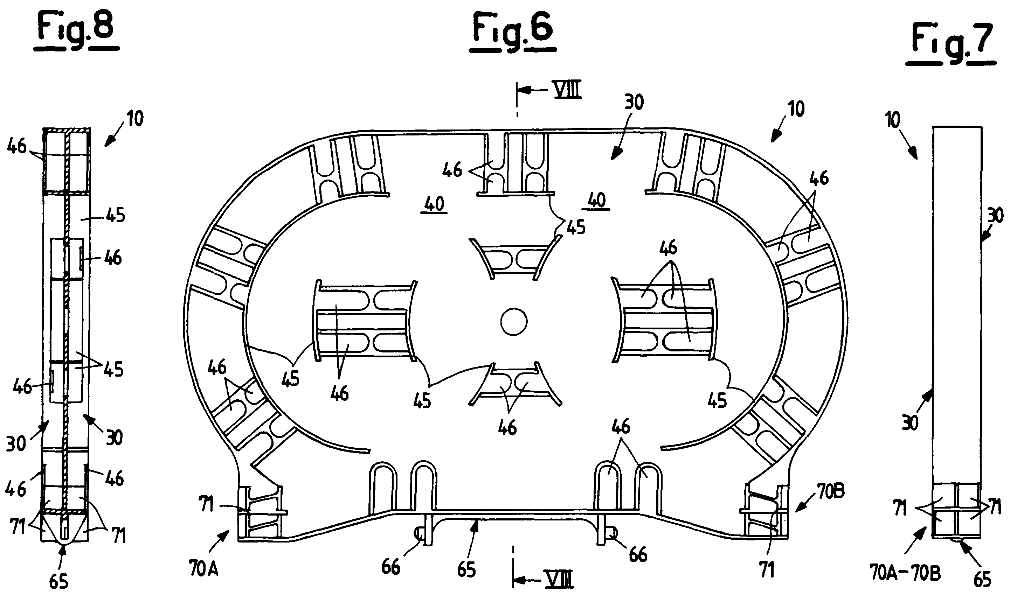

Figure 6 is a plan view of one of the two faces of an exemplifying but non-limiting second embodiment of the junction card of the present invention; the other face of the card being identical in shape and in optical fibre connections;
Figure 7 is a side view of the junction card of Figure 6;
Figure 8 is a section on the line VIII-VIII of the junction card of Figure 6;
Figure 9 is an enlarged detail of the junction card of Figure 6;
Figures 10-16 show some possible methods of cabling an individual fibre or a continuous ribbon on one of the two faces of the junction card of Figure 6; the optical fibre connections are similar on both sides of the card, and in addition it can be noted that the same cabling methods can also be used on the faces of the junction card of Figure 2.

In the aforesaid figures, the reference numeral 10 indicates overall a fibre-optic junction card according to the present invention, and 20 indicates a rack, housing the junction cards, within a joint cover or junction module.

The rack 20 is provided with holes 24 for fixing to supports and/or other electronic equipment. The holes 24 are provided in the base of the rack 20, which is generally rectangular.

The cards 10 can be removed as required, each being swivel-mounted on the rack 20 by the engagement of two pins 66 forming part of a coupling system 65 and situated on the lower part of the card 10 to engage in holes 22 provided in protuberances 23 of the rack 20.

The protuberances 23 are positioned at a constant fixed distance apart, on one and the other side of the rack 20, along its major sides 26.

They enable one or more cards 10 to be rotated so that they can lie one against another, towards one or other end of the rack 20.

Each card 10 is constructed of thermoplastic material and is double fronted in the sense that it enables single or ribbon-type optical circuits to be housed on each of the two faces 30.

In this manner two ribbons can be housed within one and the same card 10, so that the overall cabling volume is less, for equal required performance, than the alternative arrangement of positioning the abundance of fibre 50 on a single face 30 of the card 10.

In addition, each face 30 comprises conduits defined by containment fins 46 and projections 45, which house and protect the abundance of optical fibre 50 and ensure a minimum radius of curvature of 30 millimetres, and internal regions 40, 58, 59 also surrounded by projections 45 to protect, and maintain separated (in appropriate shaped containers), signal mixer devices or other accessories and network-connectable passive optical components such as mixers, splitters, couplers or WDMs able to increment the functional characteristics of the junction card 10.

In the lower part of the card 10 there are provided two equal accesses 70A, 70B located to the right and left about an axis passing through the centre of the card 10, and through which the continuous cable fibres can pass both in entering the card 10 and in leaving it, so as to provide the network proprietor with full availability of all the optical fibres 50 of the cable at every point.

Usually, one of the accesses 70A allows the fibre 50 to be inserted from the outside, the other access 70B allowing the fibre 50 to leave to the outside. In correspondence with the accesses 70A, 70B the single fibres 50 or the continuous optical fibre ribbons are fixed into seats 71, possibly provided with gaskets and guide rings.

The seats 71 can be of circular or rectangular cross-section, this to facilitate the insertion of possible rubber-coated gaskets.

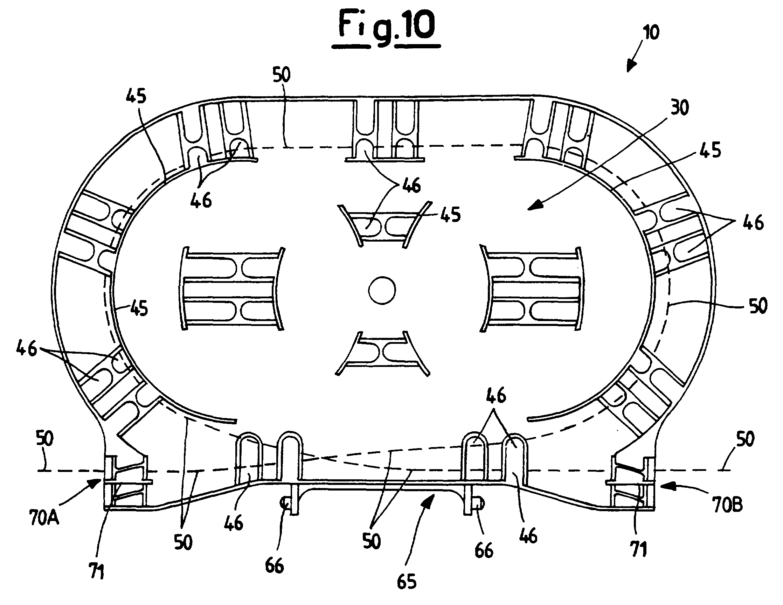

Figure 9 shows a particular form of the accesses 70A, 70B in which seats 71 of rectangular cross-section are provided, bounded by containment fins 72, 73 for the optical fibre 50.

Finally, within the card 10 there are positioned the junctions of the fibres 50, which are coupled by various junction protection methods, such as acrylate restoration, heat-shrinking joints or mechanical joints.

The orientation of the cards 10 is such that it becomes very easy to operate on the optical fibres 50 contained in them after flipping them over individually one onto another towards opposite ends of the rack 20, using the pins 66 as fulcrums.

The two possible directions in which the cards 10 can lie one against another result in an angle between them within the range of 60-120 degrees (extreme values included) and is preferably 90 degrees.

Each ribbon is arranged in an ordered manner within its card 10 by positioning the abundance of fibre 50 along an obligatory path, involving the entire card 10, in various ways depending on the application.

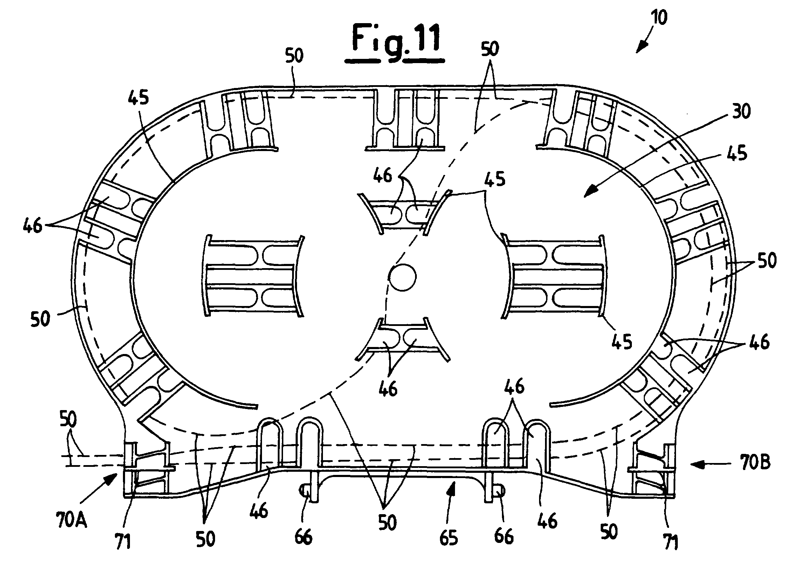

Some cabling possibilities are shown by way of example in Figures 10-16, in which the paths of the fibre 50 are illustrated by dashed lines.

For example, Figure 10 shows a first example of cabling for the optical fibre 50 or continuous ribbon within the card 10, in which the fibre 50 enters through the access 70A and leaves through the access 70B.

In contrast, in Figure 11 the fibre 50 or continuous ribbon enters the card 10 and leaves therefrom through the same access 70A. The extension of this cabling method to the specular arrangement (ie with the fibre 50 entering and leaving through the same access 70B) is immediate.

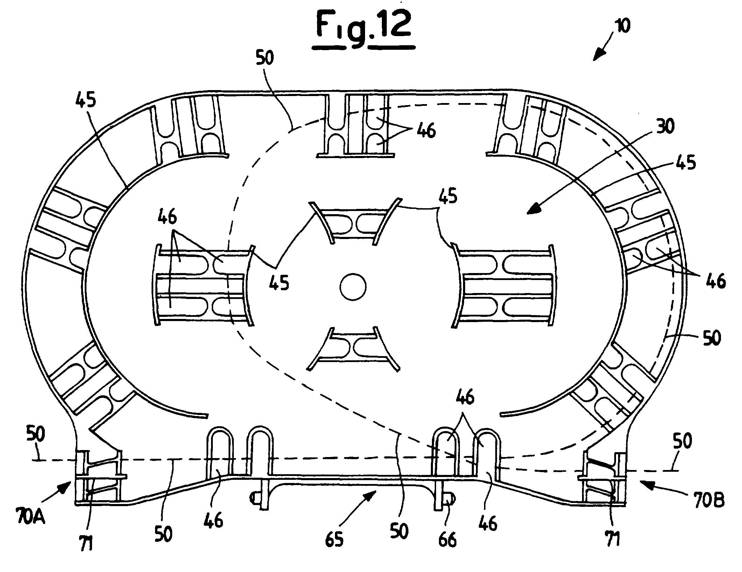

Figure 12 shows a second cabling example for the optical fibre 50 or continuous ribbon, with the fibre 50 entering through the access 70A and leaving through the access 70B.

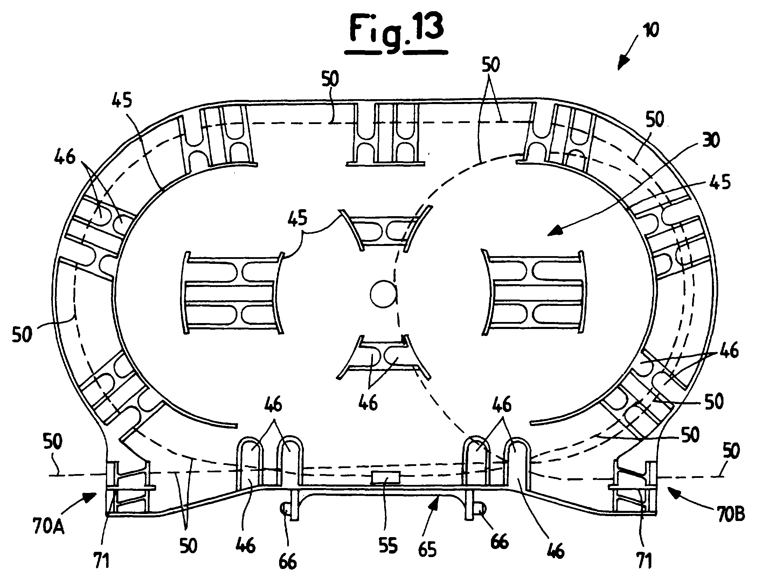

Figure 13 shows a particular cabling arrangement with the fibre 50 entering and leaving through different accesses 70A, 70B, and in which an optical joint 55 is used, housed within the card 10 and coupled to the fibre 50 by the known electronic acrylate restoration method.

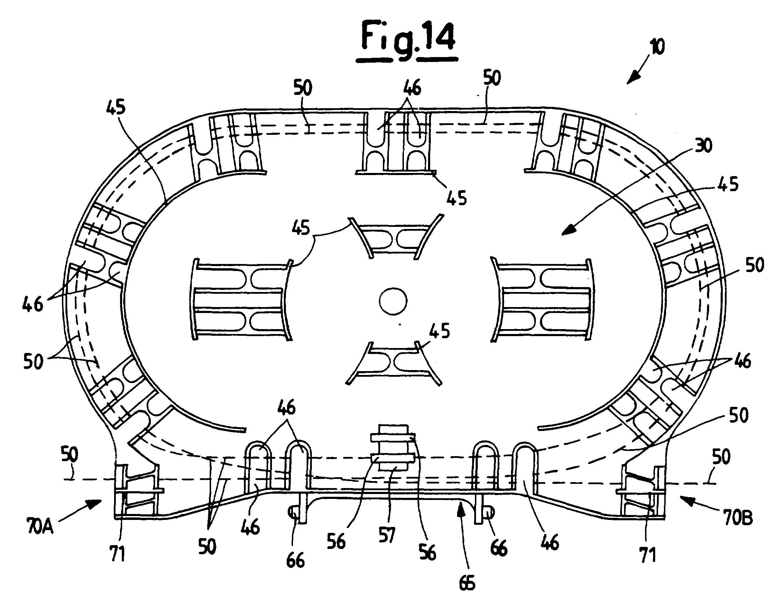

Figure 14 shows a cabling arrangement for the fibre 50 in which this enters and leaves the card 10 through different accesses 70A, 70B and in which heat-shrinking joints 56 are used located on a support 57 positioned on the surface 30 of the card 10.

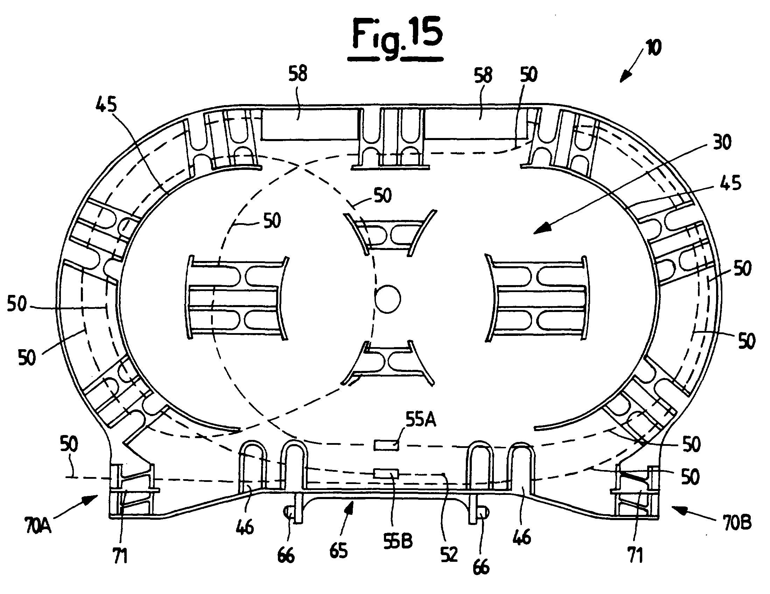

Figure 15 shows a further cabling arrangement for the optical fibre 50 or continuous ribbon within the card 10, which also houses passive monolithic components (in the seats 58 of the card 10) and optical joints 55A and B. It should be noted that after the fibre 50 has entered the card through the access 70A, its cabling is interrupted in the figure in proximity to the optical joint 55B so as not to complicate the drawing. In reality the fibre 50 cabling shown in the figure is only one half of the total cabling, the other half of the path of the fibre 50 being exactly specular to the first, starting from the access 70B and finishing in proximity to the joint 55B (the reference point in question being indicated in the figure by the number 52), where the cabling is interrupted arbitrarily, as stated.

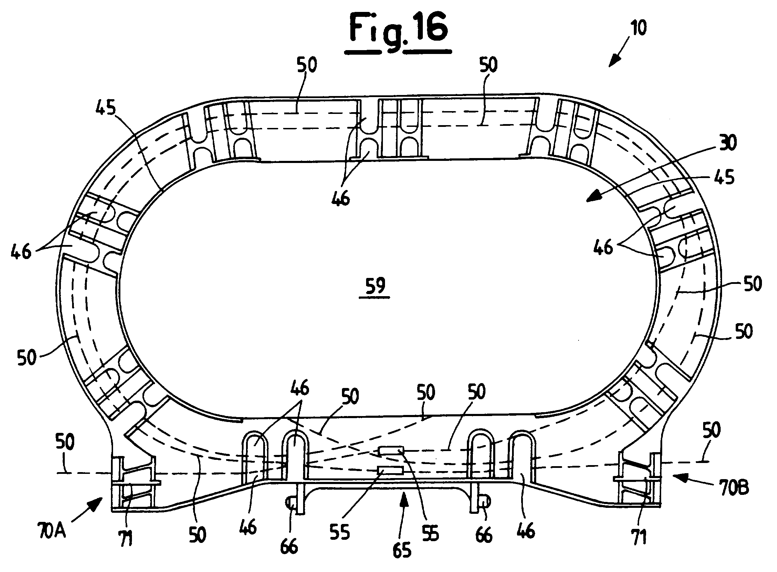

Finally, Figure 16 shows a possible cabling arrangement for the optical fibre 50 or continuous ribbon within the card 10, in which there are arranged one or more dedicated passive components and two optical joints 55. The fibre 50 enters and leaves through the accesses 70A, 70B respectively, the added passive components being housable in the seat 59 provided on the surface 30 of the card 10.

The operations involved in inserting and maintaining the fibre 50 and in extracting the abundance of fibre 50 do not alter the configuration or curvature of those optical fibres already in service but not requiring maintenance work and/or extraction.

In addition, the internal configuration of the cards 10 facilitates ordered arrangement of the ribbons and single fibres, for the purpose of allowing gradual connection of all users and making immediate access possible to any predetermined ribbon or optical fibre, without having to use random identification attempts and hence without disturbing signal transmission by any adjacent optical fibres already in service.

The junction cards 10 are present in a variable number, depending on the dimensions of the joint cover or junction module in which they are housed, the ribbons of optical fibres 50 being connected to the faces 30 of each card 10 by known electronic methods.

Finally, in terms of simplicity of installation and versatility of use, the particular configuration of the described junction card 10 enables work to be carried out on any card 10 subsequent to its initial installation, without disturbing the existing service on the other cards.

From the aforegoing description the characteristics of the fibre-optic junction card of the present invention are apparent, as are its resultant advantages.

In particular, these include:
- ease of installing new fibre-optic communication networks and simplicity of using the card within joint covers or junction modules during installation, extraction and maintenance work, by virtue of maximum accessibility to the fibre connections;
- ability to house two continuous fibre ribbons within a single junction card in a separated manner;
- ability to indefinitely maintain separated the optical circuits mounted on the card;
- full availability of all the continuous fibres of the cable at every point of the communication network;
- ability to work on any card without disturbing signal transmission on the other cards;
- ability to house in appropriate shaped containers a series of passive optical components arranged to increment the card functional characteristics.

It is apparent that numerous modifications can be made to the junction card of the present invention, but without leaving the novel principles inherent in the inventive idea, it being also apparent that in the practical implementation of the invention, the materials, shapes and dimensions of the illustrated details can be chosen at will according to requirements, and can be replaced by others technically equivalent.

## Claims

1. A junction card (10) for optical fibres (50), of the type used in joint covers or junction modules, for installing, repairing and extracting single optical fibres (50), continuous optical cable fibres and fibre ribbons, of substantially rectangular or oval shape, in which means (65, 66) are provided for their fixing to at least one rack (20) containing holes (22) in protuberances (23) which project from the rack (20) and are located along the major sides (26) thereof, in which holes said fixing means (65, 66) for the card (10) are inserted, characterised in that the continuous cable fibres or the joints of each ribbon and of the single fibres (50) are housed on both of the two constituent faces (30) of said card (10), the junction cards (10) being individually turnable to lie one against another from a first rest position to a second rest position, said two positions being symmetrical and specular about an imaginary axis passing through the centre of each hole (22) of the rack (20), in such a manner as to facilitate service work on continuous single fibres (50) and ribbons housed in an ordered manner within the pertinent card (10), without altering the configuration or curvature of the fibre ribbons not involved in the service work nor causing significant disturbance to the signal transmitted through normally operating fibres (50).

2. A junction card (10) as claimed in claim 1, characterised by being removable from the rack (20) by simply disengaging at least one pin (66) from said holes (22).

3. A junction card (10) as claimed in claim 1, characterised in that said two rest positions lie along directions which form a contained angle within the range of 60-120 degrees (extreme values included).

4. A junction card (10) as claimed in claim 3, characterised in that said angle is 90 degrees.

5. A junction card (10) as claimed in claim 1, characterised in that a ribbon or a single optical fibre (50) is arranged on said junction card (10) along a substantially curvilinear path, said ribbon or single fibre (50) arriving from the outside of said card (10) via an access (70A, 70B) provided with containment seats (71, 72, 73), said ribbon or single fibre (50) leaving the card (10) via the said or other access (70A, 70B).

6. A junction card (10) as claimed in claim 5, characterised in that said ribbon or single optical fibre (50) is cabled, at least partially, within a plurality of seats situated on the surface of at least one of the faces (30) of the card (10) and provided between a plurality of containment projections (45) and fins (46) for protection purposes, such that the minimum radius of curvature of said ribbon or single fibre (50) is not less than 30 millimetres.

7. A junction card (10) as claimed in claim 1, characterised in that at least on one face (30) there are provided a plurality of seats (40, 58, 59) in which optical joints (55, 55A, 55B) and/or mechanical joints and/or heat-shrinking joints (56) and or supports for joints (57) and/or monolithic passive optical components and/or other optical components insertable into the communication network such as signal mixers, splitters, couplers or WDMs, able to increase the functional characteristics of the card (10), are arranged.
